# EUROPEAN PATENT SPECIFICATION

(11) **EP 2 795 971 B1**
(45) Date of publication and mention of the grant of the patent: **11.10.2017**
(21) Application number: 12859600.4
(22) Date of filing: 23.12.2012
(51) Int. Cl.: H04W 8/24, H04W 4/00, H04W 4/20, H04W 12/08, H04W 48/04, H04W 92/18

(54) **AUTOMATICALLY QUIETING MOBILE DEVICES**
AUTOMATISCHE RUHIGSTELLUNG MOBILER VORRICHTUNGEN
MISE AU SILENCE AUTOMATIQUE DE DISPOSITIFS MOBILES

(30) Priority: 23.12.2011 US 201161580137 P; 22.12.2012 US 201213726090
(43) Date of publication of application: 29.10.2014
(73) Proprietor: Microsoft Technology Licensing, LLC, Redmond, WA 98052 (US)
(72) Inventor: MATTHEWS, III, Joseph H., Redmond, Washington 98052-6399 (US); KING, Joseph Spencer, Redmond, Washington 98052-6399 (US); SCHRADER, Joseph A., Redmond, Washington 98052-6399 (US); CHEN, Ted Tai-Yu, Redmond, Washington 98052-6399 (US); SARIN, Raman K., Redmond, Washington 98052-6399 (US)
(74) Representative: CMS Cameron McKenna Nabarro Olswang LLP
(86) International application number: PCT/US2012/071559
(87) International publication number: WO 2013/096950

(56) References cited:
- EP-A2- 2 169 946
- WO-A1-2006/099535
- WO-A2-2005/031544
- US-A1- 2004 166 878
- US-A1- 2006 046 706
- US-A1- 2010 227 588
- US-A1- 2011 021 234
- US-B1- 6 678 508

## Description

### BACKGROUND

Many types of devices, such as mobile phones, tablet devices, and other computing, communication, and entertainment devices increasingly offer more functions, applications, and features which are beneficial to a user, and can enhance one's personal time as well as work and social activites. For example, not only can a mobile phone be used for text, email, and voi ce communications, but may also be used for entertainment, such as to listen to music, surf the Internet, watch video content, gaming, and for photo and video imaging. Similarly, a portable tablet device may be utilized for email, browser, navigation, and other computing applications, as well as for the various entertainment and photo features. In addition to the many computing, communication, and entertainment applications that are available to a user of a mobile phone or tabl et device, a seemingly unlimited number of third-party applications and features are also available for download to a device.

Children and teenagers with connected mobile devices may have difficulty balancing the time that they spend in front of the many various devices, commonly referred to as "screentime", with other activities, including spending time with their family and getting enough sleep. Parents often have to regulate the amount of children's time with devices, such as texting, talking on the phone, watching television, and surfing the Internet. When children over use such devices, the parents may have to step-in and physically separate a device from a child, such as by taking a mobile phone or tablet computer away at bedtime.

WO2005/031544 A2 discloses a method initiated by a parent mobile device for restricting incoming, outcomi ng phone calls, or usage of applications on a child wireless device, based optionally on specified period of times. US 2006/0046706 A1 (Lin et al.) discloses a system for temporary disabling or suspending accessories (like a video application) on a controlled wireless communication device from a controlling wireless communication device which sends controlling information embedded in an outgoing message or call to the controlled wireless communication device.

### SUMMARY

This Summary introduces features and concepts of automatically quieting mobile devices, which is further described below in the Detailed Description and/or shown in the Figures.

The invention comprises a mobile device, a system, a method, and a computer-readable storage medium as set forth in the independent claims. Preferred embodiments are defined in the dependent claims. Automatically qui eti ng mobile devices is described. In embodiments, a controlling mobile devi ce (*e.g.,* a controller device) includes a communication interface for control communication with other devices that are associated with the mobile device, and the other associated devices correspond to respective users of the associated devices. A device quiet service is implemented to initiate a device quiet control that quiets one or more of the other associated devices that are controllable by the mobile device and that are in proximity of the mobile device at a location, and the device quiet service initiates communication of the device quiet control to the one or more other devices. A device quiet control can be initiated to restrict communication and/or other functions of the other associated devices, such as for a designated time duration. Alternatively or in addition, a device qui et control can quiet the other associated devi ces at a designated location, during an event, within a designated quiet zone.

In embodiments, the controlling mobile device includes an integrated display device, and the device quiet service receives a device quiet control from the mobile device via a user interface that is displayable on the integrated display device. The device quiet service can also be implemented to initiate a device activation control to un-restrict communication and/or other functions of an associated other device responsive to a bump input of the associated other device contacting the controlling, mobile device.

In other embodiments, a device quiet system includes a network service (*e.g.,* a network of one or more server devices) that executes computer instructions as a device quiet service. The device quiet service is implemented to receive a device quiet control from the controlling, mobile device, where the device quiet control is initiated to quiet one or more of the other associated devices. The device quiet service of the system can then determine the other associated devices that are controllable by the mobile device based on identifiers of the mobile device and the other associated devices, and communicate the device quiet control received from the mobile device to the other devices that are associated with the controlling, mobile device.

### BRIEF DESCRIPTION OF THE DRAWINGS

Embodiments of automatically quieting mobile devices are described with reference to the following Figures. The same numbers may be used throughout to reference like features and components that are shown in the Figures:
FIG. 1 illustrates an example environment in which various embodiments of automatically quieting mobile devices can be implemented;
FIG. 2 is an example of a system showing two different examples of hubs for a family;
FIG. 3 illustrates example user interfaces of a parent dashboard of a parent control service of FIG. 1;
FIG. 4 illustrates examples of quiet time user interfaces when quiet time is active on a device of a device quiet service of FIG. 1, such as a lock screen displayed on a mobile phone to indicate the duration for quiet time;
FIG. 5 illustrates an example system that includes mobile devices and that are examples of the client device as described with reference to the previous figures;
FIG. 6 illustrates an example mobile device in which embodiments of automatically quieting mobile devices can be implemented;
FIG. 7 illustrates example procedure of automatically quieting mobile devices;
FIG. 8 illustrates example procedures of automatically quieting mobile devices;
FIG. 9 illustrates an example system in which embodiments of hubs can be implemented;
FIG. 10 illustrates another example system in which various embodiments of the previously described techniques can be implemented;
FIG. 11 further illustrates the various client device services that are described with reference to the previous sections; and
FIG. 12 illustrates an example system that includes an example device, which can implement embodiments of automatically quieting mobile devices.

### DETAILED DESCRIPTION

### Overview

Parental and other mobile device control techniques are described. In one or more example, techniques involving a private interaction hub are described that support communication between members of the hub to share and interact with content. A private interaction hub, for instance, may be specified for a family and thus family members may join the hub to share content, such as messages, photos, and so on. A variety of other hubs may also be configured, such as for employees, friends, and so on. Thus, sharing of content may be performed to members of the hub as a whole instead of involving individual communications as previously required using conventional techniques.

Additionally, these techniques may employ use of a parental control service to control access to content and other functionality of one controlled client device by another controller client device. An example of this is a device quiet service via which one controller client device may control operation of another controlled client device. For instance, a parent's client device (*e.g.,* a mobile phone) may interact with a device quiet service to implement a quiet time feature to control usage and/or function restrictions on other controlled phone devices, such as other family members' devices in a family group. In another instance, a quiet zone feature can be implemented by a controller user to quiet other controlled phone devices, such as other hub members' devices in a private interaction hub, based on location, time, event, and/or the dynamic status of the membership of the hub. A variety of other examples are also contemplated as further described in relation to the following sections.

While features and concepts of mobile device parental control can be implemented in any number of different devices, systems, networks, environments, and/or configurations, embodiments of mobile device parental control are described in the context of the following example devices, systems, and methods. For example, even though a parent/child relationship is described, it should be readily apparent that this relationship may also be utilized for a variety of other similar controlling device/controlled device implementations, such as employer/employee, teacher/student, and so on. Also, techniques described herein could be used for self-imposed, self-controlling quieting of a user's own mobile devices.

### Example Environment

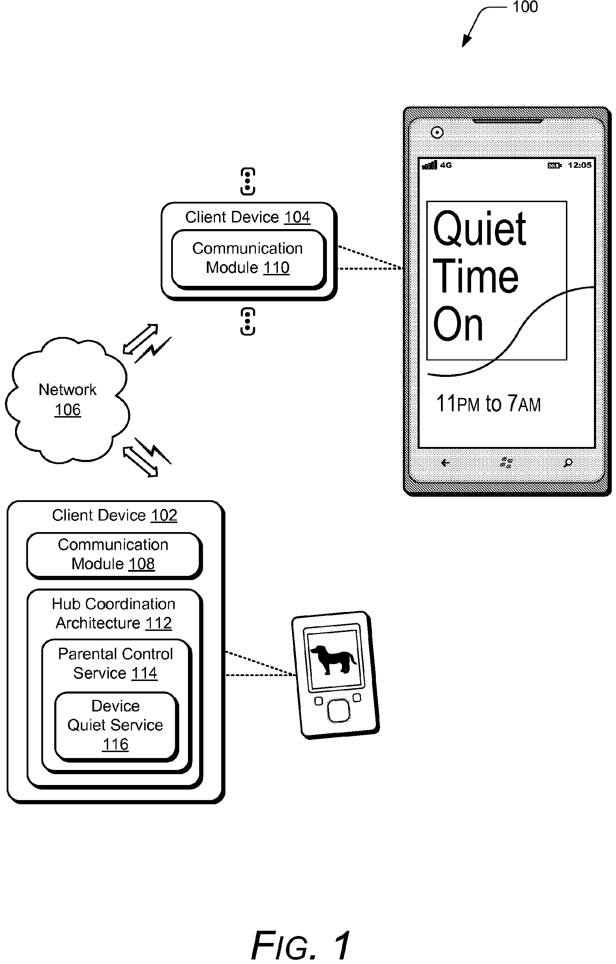

FIG. 1 illustrates an example environment 100 in which various embodiments of mobile device quiet control can be implemented. The example system includes a controlling client device 102 communicatively coupled to another controlled client device 104 via a network. The client devices 102, 104 may be configured according to a variety of different computing device configurations. In the illustrated example, the client device 102 is configured as a mobile device, although other mobile device configurations are also contemplated, such as a tablet device, communication device, convertible device, entertainment, gaming, navigation, and/or other type of portable electronic device. The client devices 102, 104 may also assume a variety of other computing device configurations, such as traditional PCs, laptops, and so on. Although a single instance of the client device 104 is illustrated, this device may be representative of a plurality of different devices and thus reference in the following discussion may be made to client device 104 in single or in plural form. Additional examples of functionality that may be incorporated as part of the client device 102, 104 may be found later in the discussion.

The client devices 102, 104 are illustrated as including respective communication modules 108, 110. The communication modules 108, 110 are representative of functionality of the devices to communicate via the network 106, such as to communicate with each other. The communication modules 108, 110 may perform this communication using a variety of techniques, such as to support voice communication, text messaging (e.g., SMS, MMS), instant messaging, communication via a social network service, email, and so on. Accordingly, the client device 102, 104 may utilize a variety of different techniques to communicate with each other.

The controller client device 102 is also illustrated as supporting a hub coordination architecture 112. The hub coordination architecture 112 is representative of functionality to provide a private interaction hub (described further herein) that supports interaction between members of the hub. The hub, or an associated application, for instance, may provide a user interface via which users of the client device 102, 104 may share content based on membership to the hub. Accordingly, the membership may act to support private sharing of content between the users of the hub based on membership to the hub. A variety of different content may be shared via the hub, such as messaging, photos, links, background image of the hub, and so on, as described further herein.

In some examples, the hub coordination architecture further includes a parental control service 114. The parental control service of the controller client device 102 may control operation of the controlled client device 104, such as in a parent/child relationship, employer/employee relationship, and so on. A variety of different functionality may be implemented by the parental control service 114, such as hub interaction, implementation of a parent dashboard, quieting mobile devices, and so on.

The parental control service 114 is further illustrated as including a device quiet service 116, which is also representative of functionality via which one controller client device may control operation of another controlled client device. For instance, a parent's client device may interact with a device quiet service to implement a quiet time feature to set usage and/or function restrictions on other client devices, such as other family members' mobile devices in a family group. In another instance, a quiet zone feature can be implemented by a control user to quiet other phone devices, such as other hub members' devices in a hub, based on location, time, event, and/or the dynamic status of the membership of the hub.

A quiet time feature can be implemented by a controller user, such as a parent user, to set usage and/or function restrictions on other controlled client devices, such as other family members' devices in a family group (*e.g*., children's mobile phones). The usage and/or function restrictions can be implemented for time-specific periods and/or based on the geo-location of a controlled mobile device. The quiet time features can be implemented in part as a user interface and/or client device application or service. Embodiments of quiet time include any one or combination of implementation features, such as described herein.

A controller user may adjust the quiet time settings, including the hours and/or days when a quiet time is in effect on a per-user or per-device basis, via a user interface, e.g., a user interface provided by the controller user's mobile device, that includes time and day setting options common in scheduling features, such as for reminders and meetings. The same user interface may allow a controller user to define what aspects of a controlled device are disabled when quiet time is enabled. Aspects that might be disabled include any type of interactive functions and/or features of a device (except, in some examples, initiating emergency telephone calls or emergency text messages and displaying the current time/date or information related to the quiet time may still be permitted), playing games, communicating (via phone, VOIP applications, text messaging, instant messaging, and/or email), using other applications (e.g., browsers, messaging applications, social networking applications, or consuming certain content (e.g., digital media content). Other device controls can be initiated to control and/or disable the functions, settings, access, and/or restrictions of a device. A controlled device that has quiet time enabled can display an indicator that quiet time is enabled, such as an icon next to the current time and day, or a display message that indicates quiet time is active (*e.g.,* displaying an icon or message "Quiet Time" on the device's home screen or lock screen).

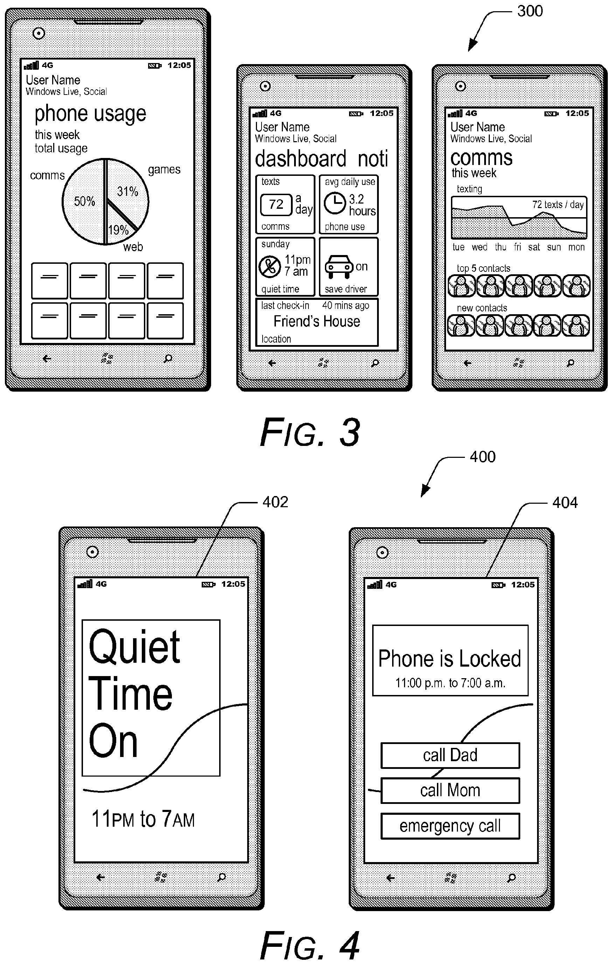

FIG. 4 illustrates examples 400 of quiet time user interfaces when quiet time is active on a device, such as a lock screen 402 displayed on a mobile device to indicate the duration for quiet time (*e.g*., displayed text "11PM to 7AM"). Another lock screen 404 is an example of a display that indicates the phone is locked, but capable of enabling critical functionality like emergency calls or communicating with parents, the individual who setup the quiet time period, emergency contacts, or another "white list" of contacts who are permissible to contact even during quiet time. The "white list" of contacts may also be able to reach a user via an incoming call, even during quiet time. In this manner, the user of the device can still perform critical functions and/or negotiate with the parent or guardian to disable the quiet time setting.

Quiet time can permit a bill payer or his delegate to have control of friends, family, kids, or others who have mobile devices on the bill payer's mobile device bill account. For example, the person responsible for paying the bill can receive a notice when friends and family exceed text and data plans, and in response, disable a child's or another's phone or mobile device directly from the bill payer's phone. With remote parental controls, a parent can also initiate a phone curfew or timeout. Rules can also be applied so that when a mobile device plan for data, text, and/or voice limits are exceeded (or projected to be exceeded) by activity on a mobile device, a service automatically shuts down some or all functionalities of the mobile device, including the functionalities that would lead to further plan overages. There may be exceptions for emergency calls and messaging.

Quiet time may be time and/or location dependent. A mobile device may also begin to learn and infer the regular schedule of a user, such as when a kid is in class at school and then out of school. This may tie in with or be inferred from a family hub calendar, another electronic calendar, or a shared electronic policy, such as a school calendar, school electronic policy or corporate policy, to initiate various quiet time modes and settings. Quiet time may implement restricted functionality, rather than control of the quieted device. Quiet time may be implemented as a group quiet function whereby a group of devices are quieted during the same time period or under the same conditions, such as during dinner all family member devices are quieted. Quiet time may also be implemented as a one-button shut-down selection, such as for church, in a movie, or to limit just gaming, and so on. Quiet time may be implemented at a business or location, such as at a church, movie theater, or coffee shop, and patron's phone devices are quieted. Quiet time may be disabled so that a quieted device is reactivated by bumping the quieted device with the controller device from which the quiet time was activated (e.g., via a near-field communication interface).

Similar to the quiet time feature, a quiet zone feature can be implemented by a controller user to quiet other controlled phone devices, such as other hub members' devices, based on location, time, event, and/or the dynamic status of the membership of the hub. The quiet zone restrictions can be implemented for time-specific periods and/or based on the geo-location of a member's phone or other mobile device. The quiet zone features can be implemented as a user interface and/or client device application or service. Embodiments of quiet zone can include any of the implementation features describe with reference to the quiet time features. Additionally, implementations of quiet zone may be initiated inside a car with hub members so as not distract the driver with noise, music, and other sounds from the other members' devices.

In some examples, quiet time or quiet zone may be self-imposed on a user's own mobile device. For example, a user may elect, via a user interface such as a volume rocker input, to self-impose an eight-hour quiet time on his own mobile device prior to going to bed. As another example, a user may elect to self-impose a quiet time on his own mobile device prior to going to bed where the end of the quiet time is determined by an active alarm time. In such examples, the user may be able to elect to lift the self-imposed quiet time prematurely by entering an indication that the quiet time should end (e.g., via a special gesture, keystroke sequence, or by the selection of a graphical control).

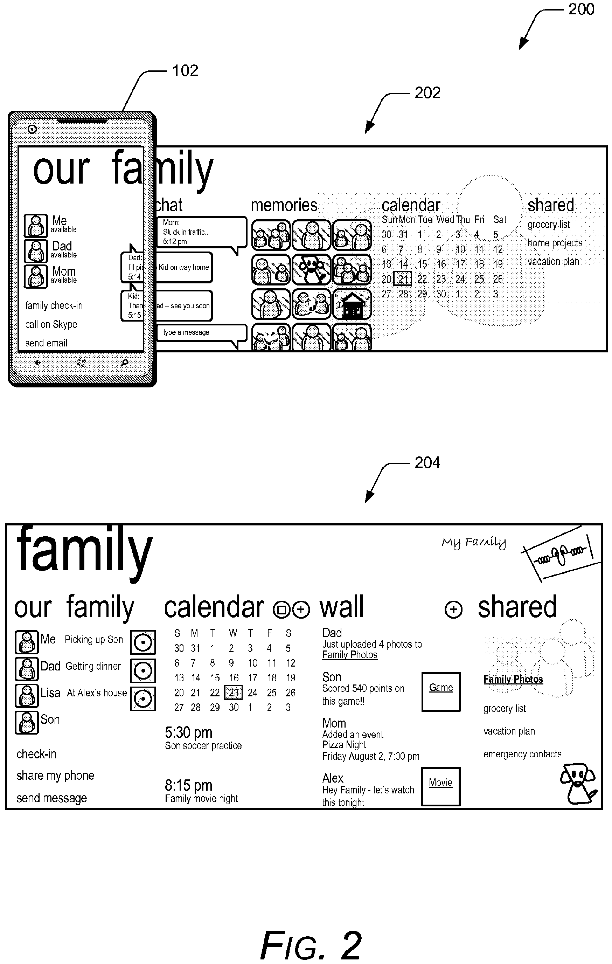

FIG. 2 is an example of a system 200 showing two different examples of hub user-interfaces for a family-orientated hub. The description, layout, orientation, features, and organization of the text, images, photos, graphics, links, data, information, and presentation features shown with reference to the hub user interfaces, as well as with reference to any other user interfaces described herein and/or shown in the figures, are merely examples that may be altered in any aspect for various embodiments and/or implementations of mobile device quieted.

The hub is a central space for membership-orientated coordination of communications, activities, information, and integration. Designated member relationships can be utilized to define how the data and information is managed, and can be implemented to leverage the social contract, such as between members of a defined familial group in the illustrated example. In one or more implementations, the hub is implemented as a user interface (e.g., via a client device application) for integration and aggregation of the membership-orientated communications, activities, and information. A hub can be implemented as a private, shared space between defined members.

Devices and/or device accounts can be associated within a set of devices or device accounts (e.g., a family phone account, user accounts, a connected set of devices, and so on), and all or a subset of the devices or accounts can communicate with other devices or accounts. Additionally, membership of the hub as well as use of the hub by the members can be controlled by a select collection of users, such as one or two mobile devices by the associated users of the client devices. For example, one of the members in the hub can be the designated control person who manages or uses the controller device that implements the device quiet service 116 to control other associated devices of private interaction hub members.

### Parent Dashboard

A parent dashboard is a privately shared space that has limited accessibility by one or more family members of a family group to view and control family-orientated information and family members' mobile device functions, features, and settings. The parent dashboard can display a visual summary of an individual family member's phone usage, history, restrictions, settings, and the like. Furthermore, the parent dashboard allows the family control member to set restrictions, grant accesses, and allocate information to the other family members in a family group.

In embodiments, the parent dashboard is implemented as a user interface and/or a client device application. Embodiments of a parent dashboard include any one or combination of implementation features, such as described in the following paragraphs. Devices and/or device accounts can be associated within a set of devices or device accounts (*e.g.,* a family phone account, live accounts, a connected set of devices, etc.), and all or a subset of the devices or accounts can communicate with other devices or accounts.

FIG. 3 illustrates example user interfaces 300 of parent dashboard. A hub control member can review the parent dashboard on a mobile phone or other mobile device to learn how other family members are using their respective mobile devices. A representation of a hub member can be selected to initiate an overall display of the member's device usage information, such as a number of texts communicated and received, who the member is communicating with, new contacts that may have been established, etc. The parent dashboard can also show the Internet sites a hub member has visited, the videos that have been displayed for viewing on the member's phone, music and/or games that have been downloaded, a purchase that has a parental advisory warning, etc. In an implementation, the top five applications, videos, games, etc. may be displayed on the parent dashboard.

The parent dashboard can also be implemented to display the last changes and/or setting adjustments to the dashboard itself, so that for example, if a kid changes the parent dashboard on a hub member's phone device, the parent will be able to detect the changed settings. The parent dashboard may be implemented for viewing with an additional level of security on the authoritative, parent's phone device, such as by biometric detection or by entering a different access code used to lockout access to the parent dashboard.

The parent dashboard can include any type of settings and control selections that are user-selectable and voice activated. A parent or other controlling entity can enforce the amount of television time, gaming time, and general device usage on all connected devices in the household that are utilized by hub members. The parent dashboard, for instance, can also be utilized to determine new contacts of a child or kid family member that has a mobile device and/or to monitor texts for identifiable language.

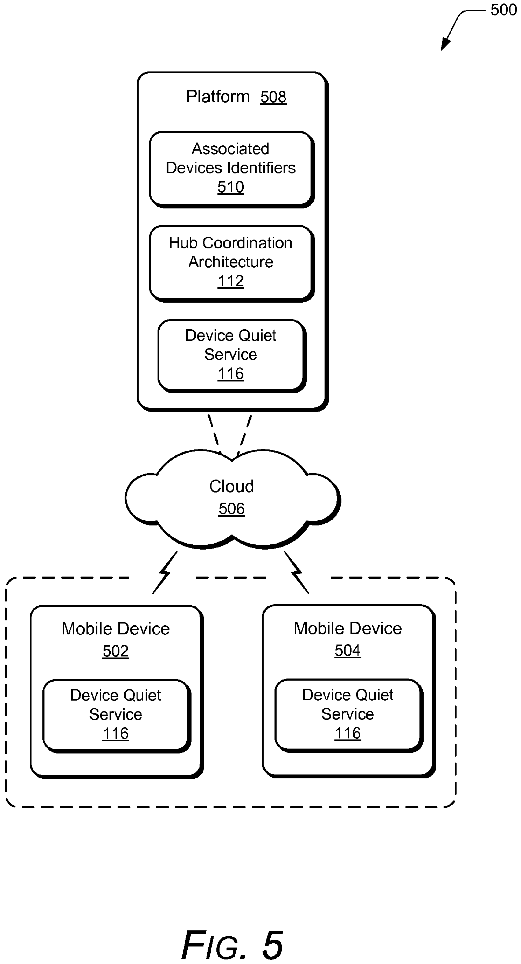

FIG. 5 illustrates an example system 500 that includes mobile devices 502 and 504 that are examples of the client devices 102 and 104 as described with reference to the previous figures. In embodiments, the mobile devices 502 and 504 can each be associated with a different user, and the users are defined members of a hub which is illustrated through use of a dashed line in FIG. 5, which may include two or more associated devices. The mobile devices each include an implementation of the device quiet service 116 as described with reference to the previous FIGS. 1-4. In the example system 500, multiple devices can be interconnected through a central computing device or system, which may be local to the multiple devices or may be located remotely from the multiple devices.

In embodiments, the central computing device may be a cloud 506 of one or more server computers that are connected to the multiple devices through a network, the Internet, or other data communication link. In embodiments, this interconnection architecture enables functionality across multiple devices to provide a networked service environment of the multiple devices. Each of the devices may have different physical configurations and capabilities, and the central computing device can utilize a platform 508 to maintain the associated devices identifiers 510, and implement the hub coordination architecture 112 and/or the device quiet service 116 in embodiments of automatically quieting mobile devices.

The cloud 506 includes and/or is representative of the platform 508 for the networked service components (*e.g.,* the parental control service 114) that implements embodiments of mobile device parental control. The platform abstracts underlying functionality of hardware, such as server devices, and/or software resources of the cloud. The networked service components may include applications and/or data that can be utilized while computer processing is executed on servers that are remote from the mobile devices 502 and 504.

In embodiments, the device quiet service 116 at the platform 508 is implemented to receive a device quiet control from a controller mobile device 502 (*e.g*., a controlling device) when the device quiet control is initiated by a user of the mobile device. The device quiet service can then determine other devices that are associated with the mobile device, and controllable by the mobile device based on the associated devices identifiers 510. The device quiet service can then communicate the device quiet control received from the mobile device 502 to the associated controlled device 504 (and to any other controllable, associated devices). In embodiments, the device quiet service 116 at the platform 508 can also implement any of the embodiments and features of automatically quieting mobile devices as described herein. In still other embodiments, peer-to-peer communication techniques may be utilized, such as multiple devices connected using a peer-to-peer communication network.

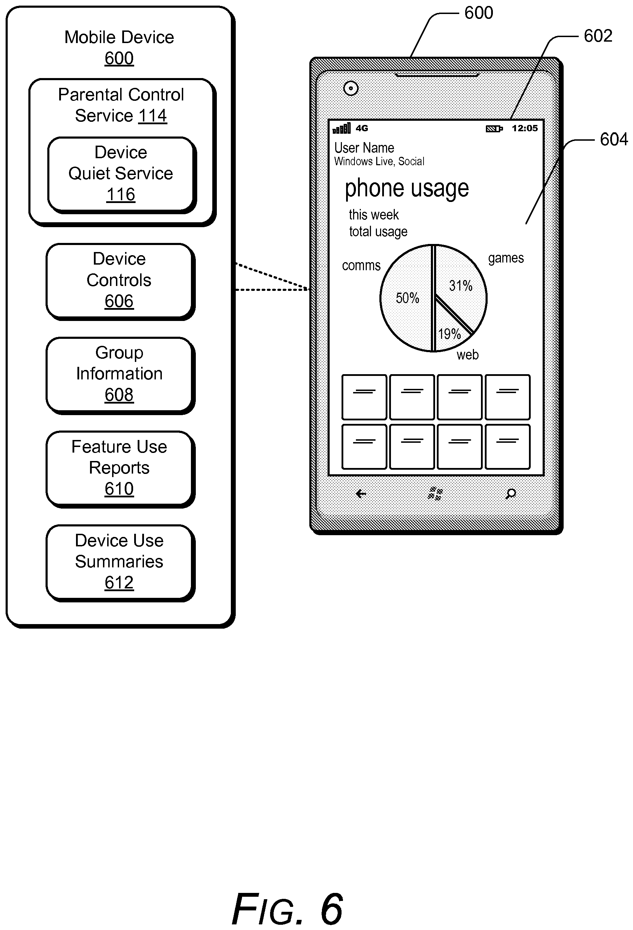

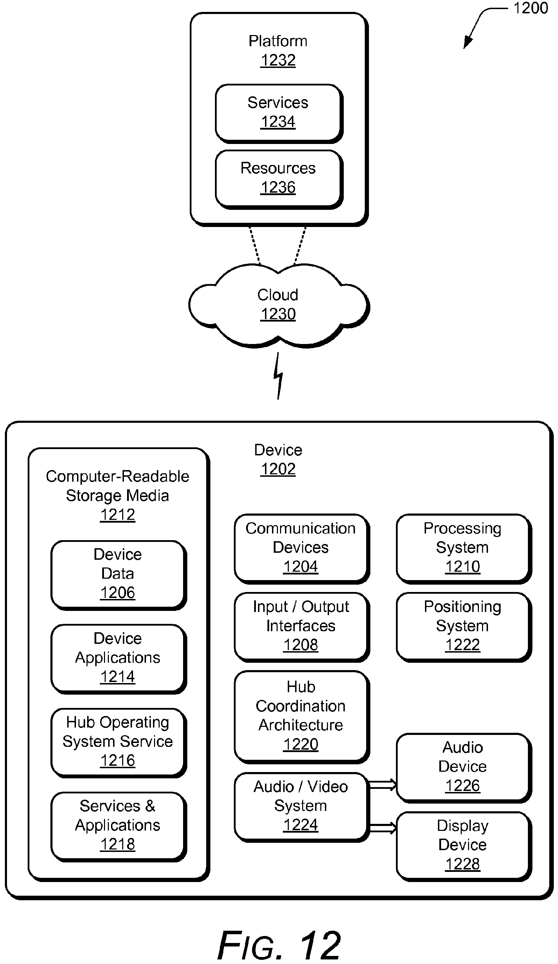

FIG. 6 illustrates an example mobile device in which embodiments of mobile device parental control can be implemented. The mobile device 600 is an example of the client device 102 or any of the other mobile devices 502, 504 described with reference to FIGS. 1-5, and can be implemented as a controlling device or an associated controlled device. The mobile device includes the parental control service 114 and can be implemented with various components, such as a processor and/or memory system, as well as any number and combination of differing components as further described with reference to the example device shown in FIG. 12. The mobile device 600 includes an integrated display device 602 on which a parental control user interface 604 can be displayed. The parental control user interface can include indications of setting changes to the parental control service.

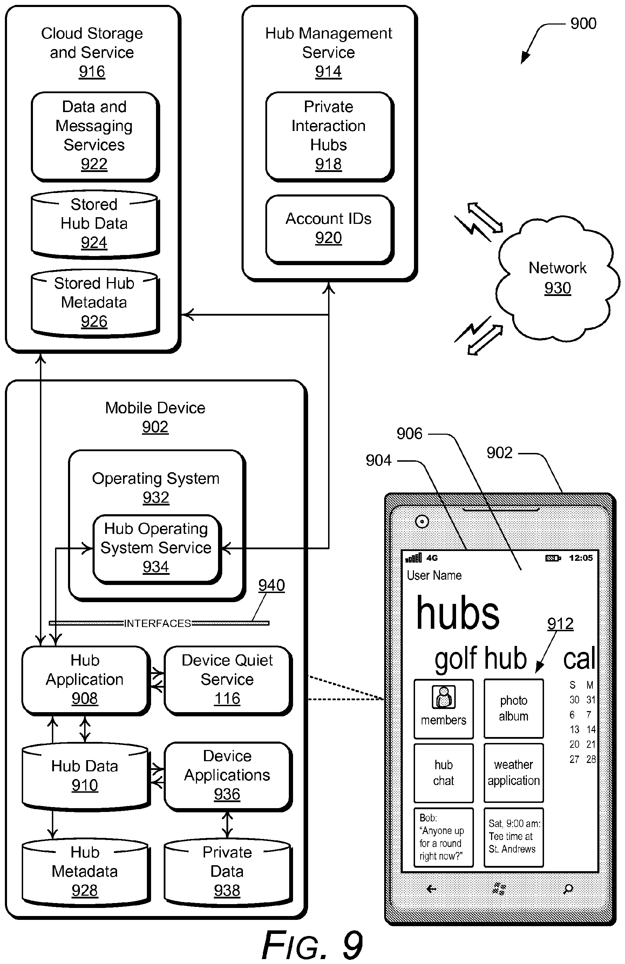

In embodiments, the mobile device 600 is a controlling device that controls one or more other controlled devices that are associated with the mobile device 600, such as mobile phones for members of a family, or a group of business members of a business. The parental control service 114 can receive an input of a device control 606 via the parental control user interface 604, where the device control is initiated for one or more of the other associated devices that are controllable by the controlling device (*e.g.,* the mobile device 600). Device controls can be initiated to control functions, settings, access, and/or restrictions of one or more of the other associated devices. The parental control service 114 can then initiate communication of the device control to the other associated devices that are controlled by the controlling device (*e.g.,* the mobile device 600). The parental control service can also control communication of group information 608 to the associated devices for the respective users of the other associated devices, such as in a private interaction hub as described with reference to FIG. 9.

The parental control service 114 can receive feature use reports 610 from the associated devices, where a feature use report indicates use of a device feature by a user of an associated device. The parental control service can then generate a device use summary 612 of device features for each of the associated devices, and the use summaries can be displayed on the parental control user interface (*e.g.,* such as shown on the parental control user interface 604 in this example). A feature use report received from an associated device can include text message content, email content, and/or identification of a new contact. A feature use report can also indicate Internet use and include Internet sites visited, or indications of content downloads, such as a video, a game, a music file, and/or a purchase. A feature use report can also include telephone call details associated with a telephone call to or from an associated device.

### Example Procedures

The following discussion describes mobile device parental control techniques that may be implemented utilizing the previously described systems and devices. Aspects of each of the procedures may be implemented in hardware, firmware, or software, or a combination thereof. The procedures are shown as a set of blocks that specify operations performed by one or more devices and are not necessarily limited to the orders shown for performing the operations by the respective blocks. In portions of the following discussion, reference will be made to FIGS. 1-6.

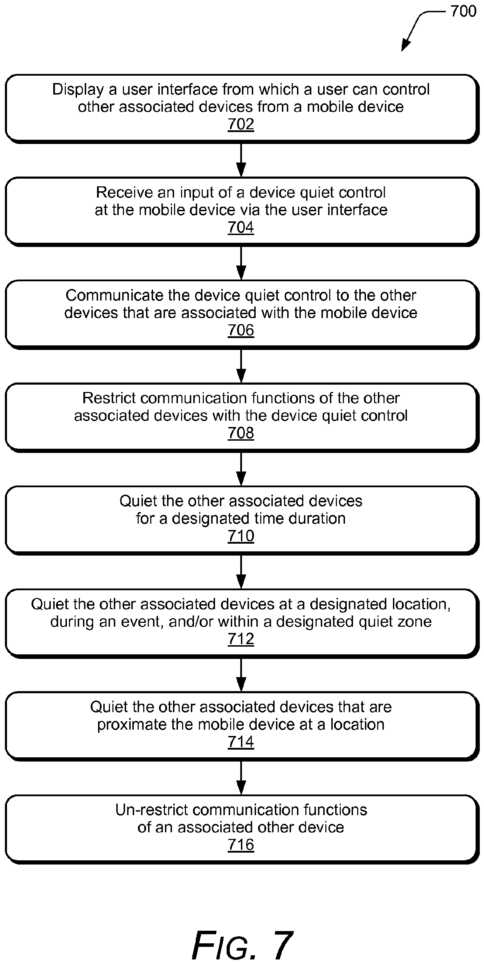

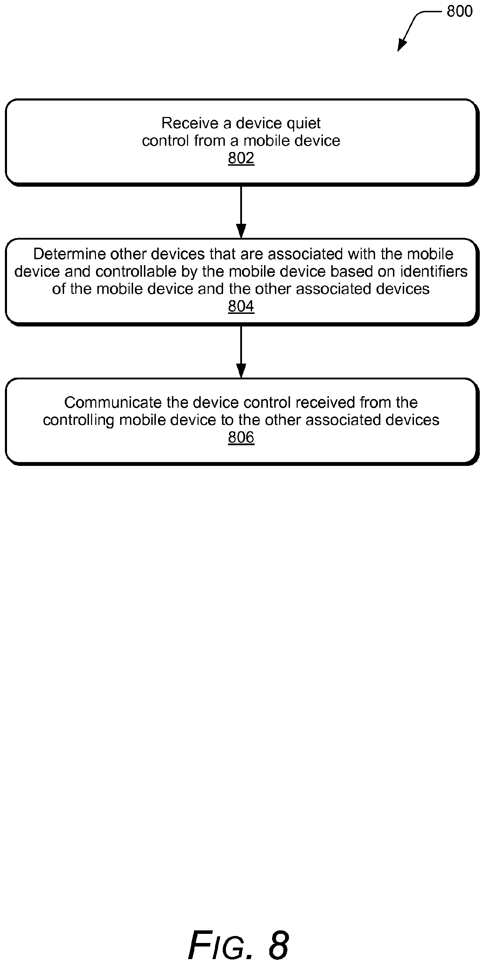

Example procedures 700 and 800 are described with reference to respective FIGS. 7 and 8 in accordance with one or more embodiments of mobile device parental control. Generally, any of the services, components, modules, methods, and operations described herein can be implemented using software, firmware, hardware (*e.g.,* fixed logic circuitry), manual processing, or any combination thereof. Example methods may be described in the general context of executable instructions stored on computer-readable storage media that is local and/or remote to a computer processing system, and implementations can include software applications, programs, functions, and the like.

FIG. 7 illustrates example procedure 700 of automatically quieting mobile devices. The order in which the method blocks are described are not intended to be construed as a limitation, and any number of the described method blocks can be combined in any order to implement a method, or an alternate method.

At block 702, a user interface is displayed from which a user can control one or more other associated devices from a mobile device. For example, the mobile device 600 (FIG. 6) includes an integrated display device 602 on which a user interface 604 is displayed, and a user can control the other associated devices from the mobile device (*e.g*., the controlling device).

At block 704, an input of a device quiet control is received at the mobile device via the user interface. For example, the device quiet service 116 implemented at the mobile device 600 receives an input of a device quiet control 606 from a user of the mobile device, such as via the user interface 604. The device quiet control is received by the device quiet service to then quiet the other associated devices that are controllable by the mobile device 600.

At block 706, the device quiet control is communicated to the other associated devices of the mobile device. For example, the mobile device 600 communicates the device quiet control 606 to one or more of the other associated devices. The mobile and/or client devices include a communication interface for control communication with the associated devices.

At block 708, functions of the other associated controlled devices are restricted in accordance with the device quiet control. For example, a device quiet control 606 initiated by the device quiet service 116 restricts the functions of the other associated devices, such as communication functions of the devices (*e.g.,* voice communication, text messaging, and/or instant messaging). Additionally, a device quiet control can be initiated to restrict or limit any other types of functions, applications, and/or features of the associated devices as described herein.

At block 710, the other associated controlled devices are quieted for a designated time duration to provided restricted or limited functions, applications and/or features. For example, a device quiet control 606 initiated by the device quiet service 116 quiets the other associated devices for a time duration at a designated quiet time 608. At block 712, the other associated devices are quieted at a designated location, during an event, and/or within a designated quiet zone and, at block 714, the other associated devices that are proximate (i.e., within a predetermined distance to) the mobile device at a location are quieted. For example, a device quiet control 606 initiated by the device quiet service 116 quiets the other associated devices at designated quiet locations 610 (*e.g.,* in a church, library, office, hospital, classroom, etc.), during an event (*e.g.,* during dinner, a movie, a meeting, etc.), within designated quiet zones 612 (*e.g.,* in a car, dining room, etc.), and/or quiets the other associated devices that are proximate the controlling mobile device at a location (*e.g.,* in a car or other location).

At block 716, communication functions of an associated other controlled device are un-restricted. For example, the device quiet service 116 implemented at the mobile device 600 initiates a device activation control that is communicated to an associated other device to un-restrict communication functions of the associated other device responsive to a bump input of the associated device contacting the device (or otherwise communicating via a near-field communications interface).

FIG. 8 illustrates example method(s) 800 of automatically quieting mobile devices. The order in which the method blocks are described are not intended to be construed as a limitation, and any number of the described method blocks can be combined in any order to implement a method, or an alternate method.

At block 802, a device quiet control is received from a mobile device. For example, the device quiet service 116 implemented as part of the platform 508 (FIG. 5) receives a device quiet control from the mobile device 502 (*e.g*., a controlling device) when the device quiet control is initiated by a user of the mobile device. The device quiet control can be initiated to quiet one or more other associated devices 804 that correspond to users of the respective devices.

At block 804, the other associated devices that are controllable by the mobile device are determined based on identifiers of the controlling mobile device and the other associated devices. For example, the device quiet service 116 at the platform 508 determines the other associated devices, such as the mobile device 504, based on the associated devices identifiers 510.

At block 806, the device quiet control received from the mobile device is communicated to the other associated devices. For example, the device quiet service 116 at the platform 508 communicates the device quiet control that is received from the mobile device 502 to the other associated device 504. The device quiet control can be initiated to restrict communication and/or other functions of the other associated devices, such as for a designated time duration. Alternatively or in addition, a device quiet control can be initiated to quiet the other associated devices at a designated location, during an event, and/or within a designated quiet zone. A device quiet control may also be initiated to quiet one or more of the other associated devices that are proximate the mobile device at a location.

### Implementation Example

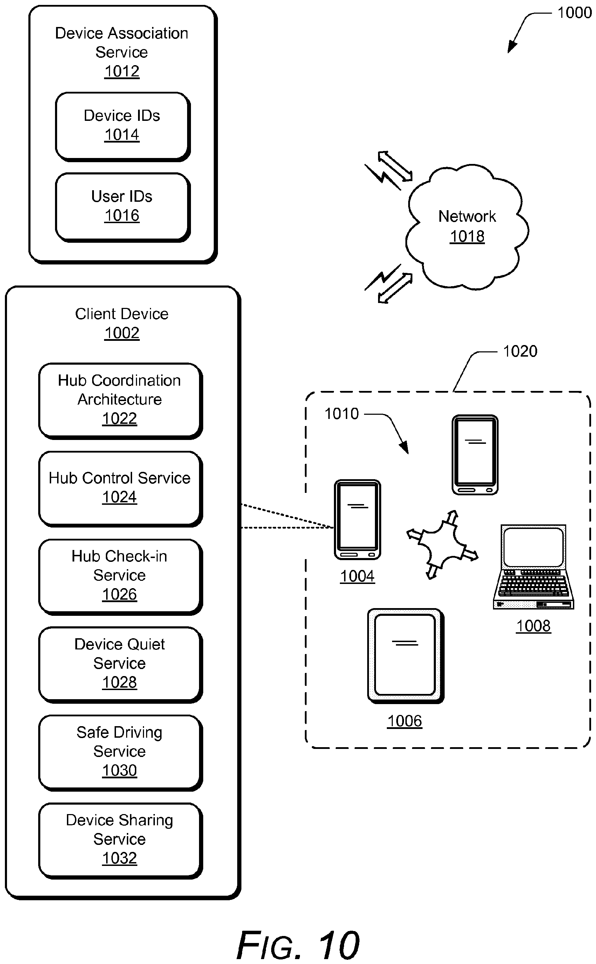

FIG. 9 illustrates an example system 900 in which embodiments of hubs can be implemented. The system 900 includes an example mobile device 902, which may be any one or combination of a wired or wireless device, such as a mobile phone, tablet, computing, communication, entertainment, gaming, media playback, and/or other type of device. Further, the mobile device 902 may be an example of one or more of the client devices as previously described. Any of the devices can be implemented with various components, such as a processing system and memory, as well as any number and combination of differing components as further described with reference to the example device shown in FIGS. 10, 11, and 12. As such, the mobile device 902 may implement techniques previously described in whole in or part, such as the techniques described in relation to the device quiet service 116.

The mobile device 902 includes an integrated display device 904 on which user interfaces can be displayed, such as a hub user interface 906 of a hub application 908. The hub user interface offers a unified interactive view of the hub data 910 for a single, private interaction hub and the hub application 908 aggregates disparate types of the hub data 910 originating from the various member users of the private interaction hub. For example, the hub user interface may provide a single unified access point to shared hub messages, status updates, check-ins, hub calendar events, hub media, hub applications, and other types of hub content. As described above, a private interaction hub (or simply "hub") is a private network or association of member users who voluntarily elect to privately interact and collaborate with each other in a bi-directional manner. The hub data 910 includes any shared data or metadata that is used to facilitate the interaction and collaboration between the members of a private interaction hub, and may include shared data for messaging, notes, contact management, documents, tasks, location updates, photos, calendar events, applications (to include collaborative gaming applications), and/or other media content, such as any type of audio, music, video, and/or image data that may be available or accessed from any source.

The basic functionality of an example private interaction hub is shown as a golf hub displayed in the hub user interface 906 of the hub application 908. For example, the hub user interface can include various selectable user interface tiles 912, such as a members tile that is selectable to initiate a display of the constituent members of the private interaction hub. The user interface tiles 912 may also include hub chat and/or messages tiles to allow a hub member to participate in shared messaging threads with the other member users of the hub. For example, as shown, the member "Bob" has asked "Anyone up for a round right now?" The user interface tiles 912 may also include a photo album tile that is selectable to view photos shared by any of the hub members with the hub, and a shared notebook tile from which the hub members can view shared notes. For example, the golf hub may include a shared notes document that compiles the hub members' collective research of new golf equipment. The hub user interface 906 may also display a shared calendar that allows a member of the hub to view, edit, and post calendar events that will be shared with all of the other hub members. For example, the calendar tile shows an upcoming tee time at St. Andrews on Saturday at 9:00 a.m. for all of the members. When a user selects a group item (e.g., the message from Bob) or tile (e.g., the messaging tile), further details about the selected item or group items related to the selected tile may be displayed by the hub application itself or the hub application may call a different device application 936 (e.g., a messaging application) to display further details about the item(s).

When a user selects or otherwise engages with a piece of displayed hub data, such as the golf message from Bob, the hub application may provide additional details or options to the user to permit the user to interact further with the hub data. For example, the hub application may display controls to allow the user to edit or reply to Bob's message. Alternatively or in addition, when a user selects or otherwise engages with a piece of displayed hub data (*e.g.,* Bob's message), the hub application may launch or call another device application to permit the user to further interact with the piece of hub data (*e.g*., the hub application may call a native messaging application).

The hub user interface 906 of the hub application 908 can also include user-selectable access to third-party applications, such as when an application is "pinned" to, or otherwise shared with a private interaction hub. A pinned third-party application may also utilize the shared hub data, such as shared application preferences or shared application state data. For example, the golf hub shown displayed in the hub user interface 906 includes a live tile representing a third-party weather application that the members of the hub can quickly access to check the weather forecast at their local golf club, such as when planning an upcoming golf outing. A user of the mobile device 902 can also customize display aspects of a hub user interface, such as the content of the user interface and how the elements of the hub user interface are arranged. Another example of a hub user interface of the hub application 908 is a panoramic hub user interface, such as for a family-centric private interaction hub as shown and described in greater detail with reference to FIG. 2.

The example system 900 also includes a hub management service 914, and a cloud storage and service 916. The hub management service 914 manages the formation and maintenance of private interaction hubs 918. The hub management service can correlate or associate member users of a hub by associating account identifiers 920 of the members with one or more of the private interaction hubs. The account identifier 920 of a member user may be associated with an identifier of a private interaction hub 918 in a data table that the hub management service maintains to correlate the hub members with one or more of the private interaction hubs. The hub management service 914 may also associate devices that correspond to hub members based on device identifiers. The account identifiers 920 can include user membership identifiers and/or sign-on credentials, such as an email and password combination, or a username and password combination. The sign-on credentials may be single sign-on ("SSO") credentials that are utilized for authentication purposes at a number of Web services, including the cloud storage and service 916.

The cloud storage and service 916 can include any type of cloud-based (*e.g.,* network-based) data and messaging services 922. The messaging services may include any type of email, text (*e.g.,* SMS, MMS), and/or instant messaging services. The data services may include any type of calendar, photo album, file or document sharing, location, mapping, music sharing, video sharing, gaming, contacts management, and/or notebook services, as well as any other type of services that can be used to share stored hub data 924. The stored hub data can include any form of messages, updates, events, content, media, and information that is maintained for the private interaction hubs 918, and is accessible from the mobile device 902, either upon a request from a device and/or upon a data "push" to the device. The cloud storage and service 916 also maintains stored hub metadata 926 that includes settings and information pertaining to the private interaction hubs 918, such as the name of a hub, the background image or photo of the hub, and an association of the hub members.

Although shown together as data and messaging services 922, various application data services and various messaging services may be operated on separate devices and/or operated by separate, distinct entities. Additionally, although the hub management service 914 and the cloud storage and service 916 are shown as independent services, they may be implemented together as a single service. Further, a server device (or group of server devices) can include implementations of both the hub management service 914 and the cloud storage and service 916, representative of a single entity that may be the same server system, company system, domain, and the like.

The cloud storage and service 916, and its constituent data and messaging services 922, interchange the stored hub data 924 and the stored hub metadata 926 between the mobile devices that are associated with member users of a private interaction hub 918. For example, a data and/or messaging service of the cloud storage and service 916 can receive a copy of hub data 910 and/or hub metadata 928 from the mobile device 902 that is used by a hub member, store this hub data and hub metadata in the cloud storage as the respective stored hub data 924 and stored hub metadata 926, and then distribute the stored hub data and stored hub metadata to other mobile devices associated with other member users of the same private interaction hub, as well as to other mobile devices associated with the same hub member. The stored hub metadata 926 can include membership information pertaining to the member users of a private interaction hub, hub identifiers that correlate a piece of hub data to a particular private interaction hub, user identifiers that correlate a piece of hub data to a particular member user, modification dates, and/or other metadata.

The cloud storage and service 916, and its constituent data and messaging services 922, may utilize single sign-on ("SSO") credentials for authentication purposes to limit the dissemination of the stored hub data 924 and the stored hub metadata 926 to only the authorized devices of hub members. Additionally, any of the devices and services (*e.g.,* implemented as server devices) described herein can communicate via a network 930, which can be implemented to include a wired and/or a wireless network. The network can also be implemented using any type of network topology and/or communication protocol, and can be represented or otherwise implemented as a combination of two or more networks, to include IP-based networks and/or the Internet. The network may also include mobile operator networks that are managed by a mobile network operator and/or other network operators, such as a communication service provider, mobile phone provider, and/or Internet service provider. Alternatively or in addition, peer-to-peer communication techniques may be utilized, such as multiple devices connected using a peer-to-peer communication network.

The mobile device 902 includes an operating system 932 of the device, and the operating system includes a hub operating system service 934 that is implemented to integrate cloud-based services, a hub application 908, and local device applications 936 with the operating system to implement aspects of the private interaction hubs 918. The aspects that may be implemented include hub formation and membership maintenance, synchronizing the hub data 910 on the mobile device with the stored hub data 924, and the hub metadata 928 with the stored hub metadata 926, with the cloud storage and service 916, and providing the hub application 908 and the local device applications 936 on the mobile device 902 with access to the hub data 910 and the hub metadata 928. For example, the hub operating system service 934 may directly access the stored hub metadata 926 at the cloud storage and service 916.

The hub operating system service 934 (or alternatively, the hub application 908) may also determine and maintain a local copy of the membership associations of member users account identifiers 920 and identifiers of the private interaction hubs. The hub operating system service 934 may also synchronize the stored hub data 924 from the cloud storage and service 916 with the hub data 910 at the mobile device 902, and synchronize the stored hub metadata 926 from the cloud storage and service with the hub metadata 928 at the mobile device. The hub operating system service 934 may also synchronize with the cloud storage and service 916 (*e.g.,* by sending changes or additions to hub data 910 and hub metadata 928 to the cloud storage and service 916). Such data synchronizations may occur in response to a user launching the hub application.

The mobile device 902 includes the device applications 936 that permit a user of the mobile device to access, create, and/or modify the hub data 910, private data 938 of the user, as well as the stored hub data 924 that is managed by any of the data and messaging services 922 at the cloud storage and service 916. Some or all of the device applications 936 may be implemented as client-side components or modules of any of the data and messaging services 922, or may be implemented as standalone, native applications (*e.g.,* local device applications) at the mobile device. The device applications 936 typically each consume and provide access to only a portion or subset of the hub data 910 and the private data 938, such as only a single type of hub data and private data (e.g., only messaging data, but not calendar data). The device applications also typically present the consumed hub data to a user in conjunction with the private data 938. Private data is data or metadata that is not associated with a private interaction hub and that has not been shared with other members of the hub (*e.g.,* data that has not been shared via the cloud storage and service 916).

The device applications 936 at the mobile device 902 may include a native or third-party messaging application that provides a user with messaging alerts and access to messaging threads. The messaging application provides access to both shared message threads shared with a private interaction hub and private message threads between a user of the mobile device and others who are not members of the hub. The messaging application also allows a user to send a message to all of the hub members without accessing a hub user interface of the hub application. The messaging application may not provide user access to other types of the hub data 910, other than the hub messages. For example, the messaging application may not provide access to the shared calendar events or shared photo albums of the hub.

The device applications 936 may also include a native or third-party calendaring application that provides scheduling alerts and access to a visual calendar. The calendaring application provides user access to both shared calendar events that are shared with hub members, and private calendar events (*e.g.,* Exchange calendar events) that have not been shared with other members of the hub. The calendaring application also allows a user to create and/or share a calendar event to all members of the hub without accessing a hub user interface of the hub application. The application may not provide user access to other types of the hub data 910, other than the hub calendar events. For example, the calendaring application may not provide access to the shared message threads or shared photo albums of the hub.

The device applications 936 may also include a native or third-party media viewing and/or editing application that provides access to photo albums of digital photos or other digital media. The media application provides user access to both shared media files (*e.g.,* photos, videos, and/or music) shared with a private interaction hub, and private media files that have not been shared with other members of the hub. The media application also allows a user to share media files with all members of the hub without accessing a hub user interface of the hub application. The media application may not provide user access to other types of hub data 910, other than hub media files. For example, the media application may not provide access to the shared message threads or shared calendar events of the hub.

The hub operating system service 934 can expose one or more Application Programming Interfaces ("APIs"), application binary interfaces, and/or other types of interfaces 940 to the hub application 908 and to the device applications 936 on the mobile device 902 to allow these applications to access, generate, and/or modify the hub data 910 and/or the hub metadata 928, as described herein. The hub operating system service 934 can be implemented as an integrated software component or module of the operating system 932. The hub operating system service can be maintained at the mobile device 902 as executable instructions that are stored on computer-readable storage media, such as any suitable memory device or electronic data storage as described with reference to the example device shown in FIG. 12. Additionally, the hub operating system service can be executed with a processing system at the mobile device to implement aspects of private interaction hubs.

In embodiments, the hub operating system service 934 can initiate the hub management service 914 to provision a private interaction hub 918. A user of the mobile device 902 can start a private interaction hub 918 and also invite others to join an existing private interaction hub. For example, the hub user interface 906 of the hub application 908 may provide an existing hub member with the option to add a new member to the hub, and the user may identify the prospective member by providing either a mobile device number, or by selecting an existing contact from one of their social networks or other contacts.

The hub operating system service 934 can receive the request from an existing member user of the device and, in response, the hub operating system service 934 and/or the hub management service 914 communicates an invitation to join the hub as an SMS, MMS, or instant message sent to the prospective member's mobile device that may include a link to a registration site or other registration instructions. The hub operating system service 934 and/or the hub management service 914 receives (*e.g.,* via a registration website) an acceptance to the invitation to join the private interaction hub that includes at least an account identifier (such as an SSO credential), and associates the new member with the existing hub at the hub management service 914. Updated membership information, including the new member's account identifier 920 may also be propagated to other mobile devices of other members in the private interaction hub from the hub management service 914. When the new member user joins the hub, he or she may be prompted to download and/or install various applications configured to provide access to the stored hub data 924 and the stored hub metadata 926, such as the hub application 908 and/or the any of the device applications 936. The hub application 908 may also be the entry point by which a user creates a new hub and/or modifies the membership of an existing hub.

A private interaction hub 918 can be provisioned for any association of people, such as family members, coworkers, friends, neighbors, and any other people that may be associated together in a hub. Additionally, a member user of one private interaction hub may also be a member of multiple hubs, which can be based on a single member sign-on that identifies the member to the hub operating system service 934 and/or to the hub management service 914. For example, a person may be a member of a family hub that associates members of the person's family, as well as a member of a neighborhood hub that associates members of the person's neighborhood, and a golf hub that associates the person's friends that often golf together.

The integration of the hub application 908 with the operating system 932 of the mobile device provides that a user of the device can view a message or update on the hub user interface 906 and in an application user interface of an application that is associated with the message or the update. For example, a hub calendar is integrated with the calendar application (*e.g.,* a device application 936) on the mobile device 902, and a calendar update that is displayed in the hub user interface 906 can be selected by the user to initiate the update being displayed in a calendar user interface of the calendar application. Alternatively, the user may view the calendar user interface and select a calendar event that is associated with a private interaction hub to initiate a display of the hub calendar, which includes the calendar event for the members of the hub. As another example, a hub calendar event can be displayed in a hub user interface, and the device calendar application can access and display the hub calendar event along with any private data calendar events that only the user of the device has access to view in a user interface of the device calendar application. The hub application 908 and the device application 936 both acquire the same hub calendar event data (*e.g.,* the same hub data 910 stored on the mobile device). The two different user interfaces (*e.g.,* a hub user interface and a device application user interface) display the same calendar event data.

In another example, the hub messages and chat features are integrated with messaging applications (*e.g.,* the device applications 936) on the mobile device 902, and an email, text, or instant message that is displayed in the hub user interface 906 can be selected by the user of the mobile device 902 to initiate the message being displayed in a messaging application user interface. Alternatively, the user may view a recent message from a member of a private interaction hub in a messaging application user interface, and select the message to initiate a display of the hub messages interface, such as to view the discussion thread associated with the recent message.

In embodiments, the hub operating system service 934 at the mobile device 902 can receive social network updates for the member users of a private interaction hub 918, such as when two or more of the members of a hub are also "friends" on a public social network site, such as (e.g., FACEBOOK®, TWITTER®, or LINKEDIN®). The social network updates can be pulled from a social network site based on the established association of the account identifiers 920 of the hub members of a private interaction hub 918 at the hub management service 914. The hub operating system service 934 can then aggregate the social network updates for a particular hub for display in the hub user interface 906 or on a homepage "live tile" associated with the hub. The hub operating system service 934 at the mobile device 902 can also be implemented to coordinate multi-user interactive updates to an event that is managed in a private interaction hub. For example, several members of a hub may participate in a multi-player interactive game, and each successive interactive update from a member of the hub is initiated by the member at a respective associated mobile device.

FIG. 10 illustrates an example system 1000 in which various embodiments of the previously described techniques can be implemented. The example system includes a client device 1002, which may be any one or combination of a mobile phone 1004, tablet device 1006, computing device 1008, communication, entertainment, gaming, navigation, and/or other type of portable electronic device as previously described. Any of the client devices 1010 can be implemented with various components, such as a processor and/or memory system, as well as any number and combination of differing components as further described with reference to the example device shown in FIG. 12 to implement embodiments of the techniques described herein.

The example system 1000 includes a device association service 1012 that associates or correlates the client devices 1010 by device identifiers 1014, user identifiers 1016, and/or by any other type of identifiable association. Any of the devices and services can communicate via a network 1018, which can be implemented to include wired and/or wireless networks. The network can also be implemented using any type of network topology and/or communication protocol, and can be represented or otherwise implemented as a combination of two or more networks, to include IP-based networks and/or the Internet. The network may also include mobile operator networks that are managed by mobile operators, such as a communication service provider, cell-phone provider, and/or Internet service provider. A mobile operator can facilitate mobile data and/or voice communication for any type of a wireless device or mobile phone.

The client devices 1010 can each be associated with a different user, and the users are defined members of a hub 1020. The example client device 1002 is representative of the various client devices 1010 in the hub. Any of the client devices in the family can include services, such as software applications (e.g., computer-executable instructions), that can be executed by a processor or processor system to implement the embodiments described herein. In this example, the client device 1002 includes a hub coordination architecture 1022 that implements features of a hub; a hub control service 1024 that implements features of a hub dashboard; a hub check-in service 1026; a device quiet service 1028 that implements features of quiet time and quiet zone; a safe driving service 1030; and a device sharing service 1032.

Additionally, any one or combination of the various client device services may be abstracted for implementation by a network service provider, such as the device association service 1012. For example, the client devices 1010 that are associated in the hub 1020 can be interconnected through a central computing device or system (*e.g.,* may be one of the client devices 1010), which may be local to the multiple devices or may be located remotely from the devices. In embodiments, the central computing device may be a cloud service of one or more server computers that are connected to the multiple devices via the communication network 1018 or other communication link. The interconnection architecture enables functionality across multiple devices to provide a common and seamless experience to a user of the multiple devices. Each of the client devices may have different physical configurations and capabilities, and the central computing device implements a platform to enable delivery of an experience that is both tailored to a particular device and yet common to all of the devices.

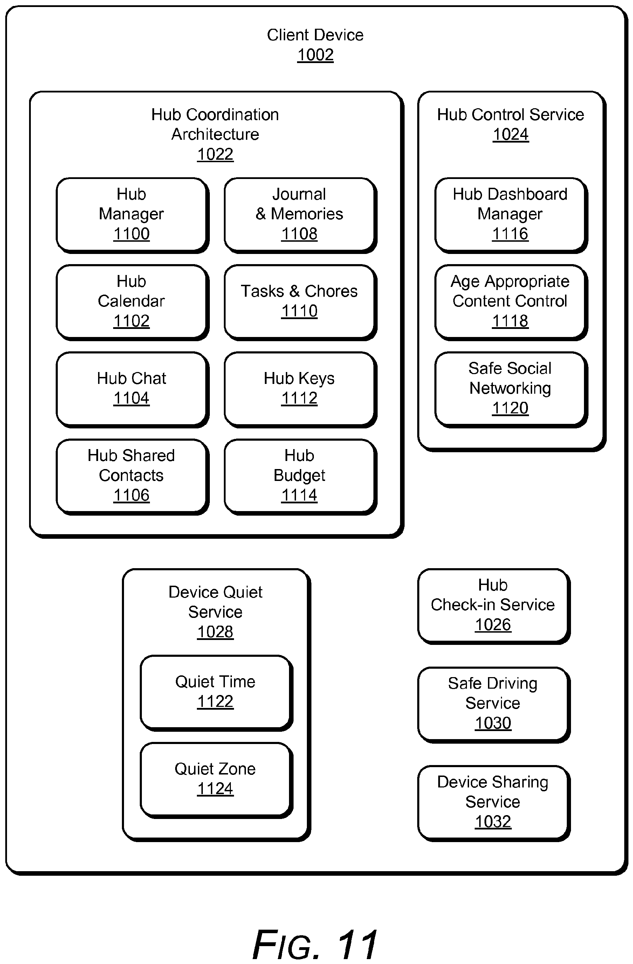

FIG. 11 further illustrates the various client device services that are described with reference to the previous sections. The client device 1102 includes the hub coordination architecture 1022, the hub control service 1024, the hub check-in service 1026, the device quiet service 1028, the safe driving service 1030, and the device sharing service 1032. In embodiments, the hub coordination architecture 1022 may generally be implemented as a service, as described herein. Generally, any of the described services may be implemented and/or described in the general context of software, firmware, hardware (*e.g.,* fixed logic circuitry), manual processing, applications, routines, programs, objects, components, data structures, procedures, modules, functions, or any combination thereof. A software implementation represents program code that performs specified tasks when executed by a computer processor. In embodiments, any of the processing, computation, filtering, code execution, etc. can be implemented with distributed computing services and/or devices, such as on a client device, a server device, and/or network-based service.

In this example of the client device services, the hub coordination architecture 1022 includes a hub manager 200 that implements, coordinates, and/or manages various hub features, such as hub calendar 1102, hub chat 1104, hub shared contacts 1106, hub journal and memories 1108, tasks and chores 1110, hub keys 1112, and hub budget 1114. The hub control service 1024 implements features such as a hub dashboard manager 1116, age appropriate content control 1118, and safe social networking 1120. The device quiet service 1028 implements features such as quiet time 1122 and quiet zone 1124. The various client device services and features are further described throughout the document.

Any of the client device services can include, be integrated with, or implement any of the other client device services and applications. For example, the hub coordination architecture 1022 can include any one or combination of the hub control service 1024, the hub check-in service 1026, the device quiet service 1028, the safe driving service 1030, and the device sharing service 1032. In embodiments, the hub coordination architecture 1022 may be implemented for the coordination of time, messaging, data, activities, and any other shared services. The shared services may be any of the client device services and/or any type of shared services that may be associated with a service and/or multi-system operator (MSO) devices. Further, the hub control service 1024 can be implemented to throttle, expand, manage, and/or reallocate data sharing of the client device services. Any of the hub features and/or applications of the hub coordination architecture can be implemented as private, some private and some public, or private with optional user control to share information and data with public third-party services and applications. Similarly, any of the client device services and applications described herein may be private, public, sharable, user-controllable, and/or any combination thereof.

FIG. 12 illustrates an example system 1200 that includes an example device 1202, which can implement embodiments of private interaction hubs. The example device 1202 can be implemented as any of the devices, services, and/or servers previously described, such as any type of client or mobile device (e.g., mobile phone, tablet, computing, communication, entertainment, gaming, media playback, and/or other type of device). For example, the mobile device 902, hub management service 114, and/or cloud service and storage 110 shown in FIG. 1 may be implemented as the example device 1202.

The device 1202 includes communication devices 1204 that enable wired and/or wireless communication of device data 1206, such as media content and the shared messages, updates, and events data at the device. The media content can include any type of audio, video, and/or image data. The communication devices 1204 can also include transceivers for cellular phone communication and/or for network data communication.

The device 1202 also includes input / output (I/O) interfaces 1208, such as data network interfaces that provide connection and/or communication links between the device, data networks, and other devices. The I/O interfaces can be used to couple the device to any type of components, peripherals, and/or accessory devices. The I/O interfaces also include data input ports via which any type of data, media content, and/or inputs can be received, such as user inputs to the device, as well as any type of audio, video, and/or image data received from any content and/or data source.

The I/O interfaces 1208 also support natural user interface (NUI) inputs to the device 1202, such as any interface technology that enables a user to interact with a device in a "natural" manner, free from artificial constraints imposed by input devices such as mice, keyboards, remote controls, and the like. Examples of natural user interface inputs may rely on speech recognition, touch and stylus recognition, gesture recognition on-screen and motion gesture recognition proximate the device, head, eye, and environment recognition and tracking, augmented reality and virtual reality systems, and any other type of audible, vision, touch, gesture, and/or machine intelligence that may determine user input intentions.

The device 1202 includes a processing system 1210 that may be implemented at least partially in hardware, such as with any type of microprocessors, controllers, and the like that process executable instructions. The processing system can include components of an integrated circuit, programmable logic device, a logic device formed using one or more semiconductors, and other implementations in silicon and/or hardware, such as a processor and memory system implemented as a system-on-chip (SoC). Alternatively or in addition, the device can be implemented with any one or combination of software, hardware, firmware, or fixed logic circuitry that may be implemented with processing and control circuits. The device 1202 may further include any type of a system bus or other data and command transfer system that couples the various components within the device. A system bus can include any one or combination of different bus structures and architectures, as well as control and data lines.

The device 1202 also includes computer-readable storage media 1212, such as data storage devices that can be accessed by a computing device, and that provide persistent storage of data and executable instructions (*e.g.,* software applications, programs, functions, and the like). Examples of computer-readable storage media include volatile memory and non-volatile memory, fixed and removable media devices, and any suitable memory device or electronic data storage that maintains data for computing device access. The computer-readable storage media can include various implementations of random access memory (RAM), read-only memory (ROM), flash memory, and other types of storage media in various memory device configurations.

Generally, computer-readable storage media is representative of media and/or devices that enable persistent and/or non-transitory storage of data in contrast to mere signal transmission, carrier waves, or signals *per se.* A computer-readable signal media may refer to a signal-bearing medium that transmits instructions, such as via a network. The signal media can embody computer-readable instructions as data in a modulated data signal, such as carrier waves or other transport mechanism.

The computer-readable storage media 1212 provides storage of the device data 1206 and various device applications 1214, such as an operating system that is maintained as a software application with the computer-readable storage media and executed by the processing system 1210. In this example, the device applications also include an hub operating system service 1216 that implements embodiments of private interaction hubs, such as when the example device 1202 is implemented as the client device 902 shown in FIG.9. An example of the hub operating system service 1216 is the hub operating system service 924 that is integrated with the operating system 922 at the mobile device 902, as described with reference to FIG. 9.

The device applications 1214 can also include any of the hub services and applications 1218 that implement embodiments of private interaction hubs and/or mobile devices family coordination, such as described with reference to FIGS. 9-11. The example device 1202 also includes a hub coordination architecture 1220, which may be implemented in the general context of software, firmware, hardware (*e.g.,* fixed logic circuitry), or any combination thereof to support embodiments of private interaction hubs and/or mobile devices family coordination. The device 1202 can also include a positioning system 1222, such as a GPS transceiver, or similar positioning system components, that can be utilized to determine a global or navigational position of the device.

The device 1202 also includes an audio and/or video system 1224 that generates audio data for an audio device 1226 and/or generates display data for a display device 1228. The audio device and/or the display device include any devices that process, display, and/or otherwise render audio, video, display, and/or image data. In implementations, the audio device and/or the display device are integrated components of the example device 1202. Alternatively, the audio device and/or the display device are external, peripheral components to the example device.

In embodiments, at least part of the techniques described for private interaction hubs may be implemented in a distributed system, such as over a "cloud" 1230 in a platform 1232. The cloud 1230 includes and/or is representative of the platform 1232 for services 1234 and/or resources 1236. For example, the services 1234 may include the hub management service 908 and the cloud service and storage 910 as described with reference to FIG. 9. Additionally, the resources 1236 may include any of the messaging applications and the collaborative applications as described previously.

The platform 1232 abstracts underlying functionality of hardware, such as server devices (*e.g.,* included in the services 1234) and/or software resources (*e.g.,* included as the resources 1236), and connects the example device 1202 with other devices, servers, etc. The resources 1236 may also include applications and/or data that can be utilized while computer processing is executed on servers that are remote from the example device 1202. Additionally, the services 1234 and/or the resources 1236 may facilitate subscriber network services, such as over the Internet, a cellular network, or Wi-Fi network. The platform 1232 may also serve to abstract and scale resources to service a demand for the resources 1236 that are implemented via the platform, such as in an interconnected device embodiment with functionality distributed throughout the system 1200. For example, the functionality may be implemented in part at the example device 1202 as well as via the platform 1232 that abstracts the functionality of the cloud 1230.

Although embodiments of automatically quieting mobile devices have been described in language specific to features and/or methods, the appended claims are not necessarily limited to the specific features or methods described. Rather, the specific features and methods are disclosed as example implementations of automatically quieting mobile devices.

## Claims

1. A mobile device (102), comprising:
a communication interface configured for communicating with one or more other devices that are associated with the mobile device and that are controllable by the device, the one or more other associated devices (104) corresponding to one or more users of the devices;
a processing system (1210) to implement computer instructions as a device quiet service (116) that is configured to:
initiate (704) a device quiet control configured to quiet (714) one or more of the other associated devices (104) that are in proximity of the mobile device (102) at a location; and
initiate (706) communication of the device quiet control to the one or more of the other associated devices (104).

2. A mobile device (102) as recited in claim 1, wherein the device quiet control is configured to restrict functions of the one or more other associated devices (104).

3. A mobile device (102) as recited in claim 1 or 2, wherein the device quiet control is configured to quiet (710) the one or more other associated devices (104) for a designated time duration.

4. A mobile device (102) as recited in any one of the preceding claims, wherein the device quiet control is configured to quiet (712) the one or more other associated devices (104) at a designated location.

5. A mobile device (102) as recited in any one of the preceding claims, wherein the device quiet control is configured to quiet (712) the one or more associated devices (104) within a designated quiet zone.

6. A system comprising:
a mobile device (102) as recited in any one of the preceding claims;
other associated devices (104) corresponding to one or more users of the devices; and
a network for communicatively coupling the mobile device (102) to one or more of the other associated devices (104).

7. A method (700), comprising:
displaying (702) a user interface on a display of a mobile device (102) from which a user can control one or more other devices (104) that are associated with the mobile device;
receiving (704) an input of a device quiet control via the user interface, the device quiet control configured to quiet one or more of the other associated devices (104) that are controllable by the mobile device (102); and
communicating (706) the device quiet control to the one or more other associated devices (104); and
quieting (714), based on the received device quiet control, the one or more of the other associated devices (104) that are in proximity of the mobile device (102) at a location.

8. A method (700) as recited in claim 7, further comprising restricting (708) communication functions of the one or more other associated devices (104) with the device quiet control.

9. A method (700) as recited in claim 7 or 8, further comprising quieting (710) the one or more other associated devices (104) for a designated time duration.

10. A computer-readable storage medium (1212) comprising computer executable instructions stored thereon which when executed by a processing system (1210) cause the processing system (1210) to perform the method (700) of any one of the claims 7 to 9.

## Patentansprüche

1. Mobilvorrichtung (102), umfassend:
- eine Kommunikationsschnittstelle, die zum Kommunizieren mit einer oder mehreren anderen Vorrichtungen konfiguriert ist, die mit der Mobilvorrichtung assozüert sind und die durch die Vorrichtung steuerbar sind, wobei die eine oder mehreren anderen assoziierten Vorrichtungen (104) einem oder mehreren Benutzern der Vorrichtungen entsprechen;
- ein Verarbeitungssystem (1210) zum Implementieren von Computeranweisungen als Vorrichtungsruhigstellungsdienst (116), das konfiguriert ist zum:
- Einleiten (704) einer Vorrichtungsruhigstellungssteuerung, die konfiguriert ist, eine oder mehrere der anderen assoziierten Vorrichtungen (104), die sich in der Nähe der an einer Stelle liegenden Mobilvorrichtung (102) befinden, ruhigzustellen (714); und
- Einleiten (706) einer Kommunikation der Vorrichtungsruhigstellungssteuerung zu der einen oder den mehreren anderen assoziierten Vorrichtungen (104).

2. Mobilvorrichtung (102) nach Anspruch 1, wobei die Vorrichtungsruhigstellungssteuerung konfiguriert ist, Funktionen der einen oder mehreren anderen assoziierten Vorrichtungen (104) zu begrenzen.

3. Mobilvorrichtung (102) nach Anspruch 1 oder 2, wobei die Vorrichtungsruhigstellungsteuerung konfiguriert ist, die eine oder mehreren anderen assoziierten Vorrichtungen (104) für eine angegebene Zeitdauer ruhigzustellen (710).

4. Mobilvorrichtung (102) nach einem der vorangehenden Ansprüche, wobei die Vorrichtungsruhigstellungsteuerung konfiguriert ist, die eine oder mehreren anderen assoziierten Vorrichtungen (104) an einer angegebenen Stelle ruhigzustellen (712).

5. Mobilvorrichtung (102) nach einem der vorangehenden Ansprüche, wobei die Vorrichtungsruhigstellungsteuerung konfiguriert ist, die eine oder mehreren anderen assoziierten Vorrichtungen (104) in einer angegebenen Ruhezone ruhigzustellen (712).

6. System, umfassend:
- eine Mobilvorrichtung (102) nach einem der vorangehenden Ansprüche;
- andere assoziierten Vorrichtungen (104), die einem oder mehreren Benutzern der Vorrichtungen entsprechen; und
- ein Netzwerk zum kommunikativen Koppeln der Mobilvorrichtung (102) an eine oder mehrere der anderen assoziierten Vorrichtungen (104).

7. Verfahren (700), umfassend:
- Anzeigen (702) einer Benutzerschnittstelle auf einer Anzeige einer Mobilvorrichtung (102), von welcher ein Benutzer eine oder mehrere andere Vorrichtungen (104) steuern kann, die mit der Mobilvorrichtung assozüert sind;
- Empfangen (704) einer Eingabe einer Vorrichtungsruhigstellungssteuerung über die Benutzerschnittstelle, wobei die Vorrichtungsruhigstellungssteuerung konfiguriert ist, eine oder mehrere der anderen assoziierten Vorrichtungen (104) ruhigzustellen, die durch die Mobilvorrichtung (102) steuerbar sind; und
- Kommunizieren (706) der Vorrichtungsruhigstellungssteuerung zu der einen oder den mehreren anderen assoziierten Vorrichtung(en) (104); und
- Ruhigstellen (714), basierend auf der empfangenen Vorrichtungsruhigstellungssteuerung, der einen oder mehreren anderen assoziierten Vorrichtungen (104), die sich in der Nähe der an einer Stelle liegenden Mobilvorrichtung (102) befinden.

8. Verfahren (700) nach Anspruch 7, ferner umfassend ein Begrenzen (708) von Kommunikationsfunktionen der einen oder mehreren anderen assoziierten Vorrichtungen (104) mit der Vorrichtungsruhigstellungssteuerung.

9. Verfahren (700) nach Anspruch 7 oder 8, ferner umfassend ein Ruhigstellen (710) der einen oder mehreren anderen assoziierten Vorrichtungen (104) für eine angegebene Zeitdauer.

10. Computerlesbares Speichermedium (1212), auf dem computerausführbare Anweisungen gespeichert sind, die, wenn sie von einem Verarbeitungssystem (1210) ausgeführt werden, das Verarbeitungssystem (1210) veranlassen, das Verfahren (700) nach einem der Ansprüche 7 bis 9 auszuführen.

## Revendications

1. Dispositif mobile (102), comprenant :
une interface de communication configurée pour communiquer avec un ou plusieurs autres dispositifs qui sont associés au dispositif mobile et qui peuvent être contrôlés par le dispositif, les un ou plusieurs autres dispositifs associés (104) correspondant à un ou plusieurs utilisateurs des dispositifs ;
un système de traitement (1210) pour implémenter des instructions informatiques en tant que service de tranquillisation de dispositif (116) qui est configuré pour :
initier (704) une commande de tranquillisation de dispositif configurée pour tranquilliser (714) un ou plusieurs des autres dispositifs associés (104) qui sont à proximité du dispositif mobile (102) à un emplacement ; et
initier (706) une communication de la commande de tranquillisation de dispositif aux un ou plusieurs des autres dispositifs associés (104).

2. Dispositif mobile (102) selon la revendication 1, dans lequel la commande de tranquillisation de dispositif est configurée pour restreindre des fonctions des un ou plusieurs autres dispositifs associés (104).

3. Dispositif mobile (102) selon la revendication 1 ou 2, dans lequel la commande de tranquillisation de dispositif est configurée pour tranquilliser (710) les un ou plusieurs autres dispositifs associés (104) pour une durée de temps désignée.

4. Dispositif mobile (102) selon l'une quelconque des revendications précédentes, dans lequel la commande de tranquillisation de dispositif est configurée pour tranquilliser (712) les un ou plusieurs autres dispositifs associés (104) à un emplacement désigné.

5. Dispositif mobile (102) selon l'une quelconque des revendications précédentes, dans lequel la commande de tranquillisation de dispositif est configurée pour tranquilliser (712) les un ou plusieurs dispositifs associés (104) dans une zone de tranquillisation désignée.

6. Système comprenant :
un dispositif mobile (102) selon l'une quelconque des revendications précédentes ; d'autres dispositifs associés (104) correspondant à un ou plusieurs utilisateurs des dispositifs ; et
un réseau pour coupler en communication le dispositif mobile (102) à un ou plusieurs des autres dispositifs associés (104).

7. Procédé (700), comprenant les étapes consistant à :
afficher (702) une interface utilisateur sur un affichage d'un dispositif mobile (102) à partir duquel un utilisateur peut contrôler un ou plusieurs autres dispositifs (104) qui sont associés au dispositif mobile ;
recevoir (704) une entrée d'une commande de tranquillisation de dispositif via l'interface utilisateur, la commande de tranquillisation de dispositif configurée pour tranquilliser un ou plusieurs des autres dispositifs associés (104) qui peuvent être contrôlés par le dispositif mobile (102) ; et
communiquer (706) la commande de tranquillisation de dispositif avec les un ou plusieurs autres dispositifs associés (104) ; et
tranquilliser (714), sur la base de la commande de tranquillisation de dispositif reçue, les un ou plusieurs des autres dispositifs associés (104) qui sont à proximité du dispositif mobile (102) à un emplacement.

8. Procédé (700) selon la revendication 7, comprenant en outre l'étape consistant à limiter (708) des fonctions de communication des un ou plusieurs autres dispositifs associés (104) avec la commande de tranquillisation de dispositif.

9. Procédé (700) selon la revendication 7 ou 8, comprenant en outre l'étape consistant à tranquilliser (710) les un ou plusieurs des autres dispositifs associés (104) pour une durée de temps désignée.

10. Support de stockage (1212) comprenant des instructions exécutables par ordinateur stockées sur celui-ci qui, lorsqu'elles sont exécutées par un système de traitement (1210), amènent le système de traitement (1210) à réaliser le procédé (700) selon l'une quelconque des revendications 7 à 9.
